(19) Europäisches Patentamt

European Patent Office

Office européen des brevets

(11) Veröffentlichungsnummer: **0 557 816 A2**

(12) **EUROPÄISCHE PATENTANMELDUNG**

(21) Anmeldenummer: **93102210.7**

(51) Int. Cl.5: **B03B 9/06**, B29B 17/02

(22) Anmeldetag: **12.02.93**

(30) Priorität: **26.02.92 DE 4205767**

(43) Veröffentlichungstag der Anmeldung:
**01.09.93 Patentblatt 93/35**

(84) Benannte Vertragsstaaten:
**AT BE CH DE DK ES FR GB GR IT LI LU NL PT SE**

(71) Anmelder: **Kopischke, Josef**
**Federwischer Strasse 31**
**D-36103 Flieden(DE)**

(72) Erfinder: **Kopischke, Josef**
**Federwischer Strasse 31**
**D-36103 Flieden(DE)**

(74) Vertreter: **Jahn-Held, Wilhelm W. Dr.Dr.-Ing.**
**Dipl.-Chem.**
**Schöne Aussicht 8**
**D-34355 Staufenberg (DE)**

(54) **Verfahren und Anlage zur Trennung zerkleinerter Kunststoffe verschiedener chemischer Zusammensetzung und unterschiedlicher spezifischer Dichte.**

(57) Das Verfahren zur Trennung zerkleinerter Kunststoffe ist durch folgende Stufen gekennzeichnet:
Trocken- und Nasszerkleinerung,Abtrennung von Fremdstoffen, Trennung in einem Windsichter Folien von formstabilen Partikeln, deren Einführen in ein Rührbehälter zur Homogenisierung mit einem Trennmedium,Abpumpen in einen Trennbehälter mit einem senkrechten Steigrohr und Austreten des Gemisches in eine umgelenkte, horizontale Richtung in einen, sich nach aussen erweiternden Raum, der aus dem Winkel von aufeinanderstehenden Kegelteilen und einer gedachten Linie zwischen den Eckpunkten der Grenzlinien der Kegelteile gebildet ist,der einen geometrischen Raum darstellt, indem die Strömungsgeschwindigkeit abnimmt, aus dem die Partikel in einen zylindrischen Raum eintreten und sich mit einer Steig- oder Sink- Geschwindigkeit trennen, wobei die spezifische Dichte des Trennmediums zwischen den Dichter der Kunststoff-Partikel unterschiedlicher chemischer Zusammensetzung und spezifischer Dichte liegt und danach in gleicher Weise eine weitere Trennung ibis in sortenreine Fraktionen erfolgt und Teilvorrichtung zur Durchführung des Verfahrens.

EP 0 557 816 A2

Der Anfall an Kunststoffen aus Haus- und Industrie- Müll verschiedener chemischer Zusammensetzung und unterschiedlicher spezifischer Dichte beträgt in der Bundesrepublik etwa 2,5 Millionen t / jahr.

Es ist deshalb ein volkswirtschaftlich wichtiges Problem, diesen Anfall ohne Belastung der Umwelt zu entsorgen.

Gegenstand der Erfindung ist ein Verfahren zur Trennung zerkleinerter Kunststoffe verschiedener chemischer Zusammensetzung und unterschiedlicher spezifischer Dichte.

Es ist eine Aufgabe des Verfahrens der Erfindung Kunststoffe ohne die Notwendigkeit einer Deponierung zu entsorgen.

Es ist eine weitere Aufgabe des Verfahrens der Erfindung Gemische von Kunststoffen zu trennen, sodass diese der Wiederverwertung zugeführt werden können.

Es ist eine andere Aufgabe des Verfahrens der Erfindung besteht in der Verbesserung der Arbeitsweisen nach dem Stand der Technik durch eine praktisch vollständige Trennung in Mischfraktionen oder in sortenreine Fraktionen.

Die DE 28 27 335 A1 beschreibt 1980 eine trichterförmige Trennvorrichtung mit zentralem Rührwerk und Trennung von bis auf 200ºC erhitzten Kunststoffpartikeln. Das Rührwerk bewirkt eine turbulente Strömung gegen Absetzbleche im mittleren Teil des Trichters.

Das Erhitzen des Trennmediums führt zu einer Änderung des spezifischen Gewichtes. Dieser Vorschlag kann nur eine unvollkommenen Trennungsgrad von mehrschichtigen Kunststoff-Gegenständen führen.

Die DD 256 049 A3 beschreibt 1988 ein Verfahren zur Aufbereitung von " Plastmüll". Auch dieser Stand der Technik verwendet eine trichterförmige Trennvorrichtung mit Ablenkblechen im oberen Bereich der Aufgabe des zu trennenden Materials.Die kurze Trennstrecke mit turbulenten Wirbeln gestattet nur eine unvollständige Trennung einer leichten von einer schweren Fraktion.Das getrennte Produkt mit geringem Reinheitsgrad kann nur für Produkte mit geringen Qualitätsansprüchen verwendet werden. Eine Recyclierung zu reinen Kunststoffen mit definierten physikalischen und technischen Daten für eine Zudosierung kann nicht erfolgen.

Die FR 25 73 340 beschreibt ein Verfahren zur Aufbereitung von Plastikmaterial nach Abtrennung von Papier mit einem Intensivrührer. Es sollen Kunststoffpartikel in einem zylindrischen Rohr mit einer Verengung unterhalb des Einleitungsrohres durch Erzeugung einer Zone mit reduzierter Fliessgeschwindigkeit in eine leichte, aufschwimmende und in eine schwere, absinkende Fraktion getrennt werden.

In einer anderen konstruktiven Ausbildung soll in, mit den breiten Oberseiten aufeinander stehenden Trichtern eine Trennung erfolgen. Diese soll dadurch bewirkt werden, dass der Trennraum parallele, senkrechte Trennwände aufweist, die ebenfalls röhrenförmige Trennflächen darstellen. Auf der kreisförmigen Trennlinie der beiden Trichter soll sich ein kleines Volumen einer Beruhigungszone ausbilden. Diese Zone wird jedoch in waagerechter Richtung von dem ein- und austretendem Trennmedium durchströmt.

Diese Vorrichtung gestattet nur die Trennung von Kunststoffen, die aufgrund ihrer chemischen Zusammensetzung grössere Differenzen ihrei spezifischen Gewichte aufweisen. Es wird jedoch nur unzureichender Trennungsgrad und kein sortenreines Produkt erreicht. Auch die Durchsatzkapazität ist in dieser Vorrichtung gering, da die Bildung einer turbulenten Strömung an den parallelen Blechen verringert werden muss.

Die Veröffentlichung in Kunststoffe, 74/ 1984, Seite 189, rechte Spalte, Zeilen 9- 13 von unten, bestätigt, dass sich solche Trennanlagen nach dem Stand der Technik im Schwimm- und Sink- Verfahren im praktischen Dauereinsatz als zu störanfällig erwiesen haben.

Diese Nachteile werden durch das Verfahren der Erfindung vermieden, welches erstmalig eine technische Trennung in sortenreine Fraktionen von Kunststoffpartikeln auch bei nur geringen Unterschieden in den spezifischen Gewichten gestattet. Es wird auch der Stand der Technik durch eine gesteigerte Durchsatzkapazität mit einem grösseren Trennvolumen erzielt.

Das Verfahren der Erfindung beansprucht eine Trennvorrichtung mit der konstruktiven Ausbildung eines definierten geometrischen Raumes auf zwei gegeneinander gerichteten Kegelteilen mit abnehmender Fliessgeschwindigkeit und mit der Trennung der Fraktionen in einem grösseren, zylindrischen Raum in einer ebenfalls laminaren Strömung, wobei die beiden Räume miteinander verbunden sind.

Das Verfahren der Erfindung ist im kennzeichnenden Teil des Anspruches 1 definiert. Die Unteransprüche beanspruchen die alternative und bevorzugte Ausgestaltung des Verfahrens der Erfindung. Diese betreffen auch eine Teilvorrichtung zur Durchführung des Verfahrens der Erfindung.

Die Lösung der Aufgabe der Erfindung beansprucht folgende Verfahrensstufen:

a): Trocken- oder Nasszerkleinerung der angelieferten Kunststoffe, vorzugsweise auf eine Partikelgrösse von etwa 20 - 60 mm,

Einführen der zerkleinerten Partikel in ein Schwimm- Sinkbecken, in dem die Partikel der Kunststoffe von schwereren Fremstoffen, wie metallische Gegenstände, Sand u.dergl., abgetrennt werden, in der Weise, dass am oberen Teil des länglichen Behälters eine horizontale Strömung in Richtung auf den Überlauf auf der gegenüber liegenden Seite erzeugt wird, und danach die Partikel der Kunststoffe am Überlauf austreten und die Fremdkörper am unteren Ende abgezogen werden, und das flüssige Trennmedium gefiltert und im Kreislauf zuruckgeführt wird.

b): danach die, gegebenenfalls zwischengetrockneten Partikel aus Kunststoff in einen als Siebrohr ausgelegten Windsichter eingeführt werden, in diesem Restflüssigkeit abtropfen kann, und in dem Windsichter durch eingeblasene Luft Folien- Kunststoff-Partikel (FKSTP) von formstabilen Kunststoff-Partikeln (FSTKSTP) in der Weise getrennt werden, dass die FSTKSTP aufgrund ihres geringeren Luftwiderstandes bereits am Ende des Windsichters ausgetragen und die FKSTP aufgrund ihres grösseren Luftwiderstandes weiter getragen und in getrennten Behältern aufgefangen werden, und die Luft am Ende austritt,

c): danach die FKSTP in einen Einspülbehälter eingeführt und durch Rühren, insbesondere durch seitliches Rühren, mit einem im Kreislauf geführten Trennmedium in eine hinreichend homogene Mischung übergeführt werden, oder die FSTKSP auf eine Korngrösse von annähernd 3 - 6 mm nachzerkleinert und danach in gleicher Weise in einen Einspülbehälter eingeführt und mit einem im Kreislauf geführten Trennmedium in eine hinreichend homogene Mischung überführt werden, und das flüssige Trennmedium für FKSTP sowie für FSTKSP jeweils zwischen den zu trennende Fraktionen der Kunststoffpartikel eingestellt wird,

d): Abpumpen des annähernd homogenen Stoffgemisches in einen oder mehreren Trennbehälter nacheinander oder nebeneinander vorzugsweise von unten nach oben durch ein in der Mitte des Trennbehälters angeordnetes, senkrechtes Steigrohr und Austreten des Gemisches in eine umgelenkte, annähernd horizontale Richtung in einen, sich im Winkel nach aussen erweiternden Raumes, der, im Querschnitt ausgedrückt, aus dem Winkel des oberen und des unteren, aufeinanderstehenden Kegelteiles und einer gedachten Linie zwischen den Eckpunkten der Grenzlinien der Kegelteile gebildet ist, und dieser geometrische Raum auch durch die Länge der oberen und der unteren Kegelfläche, im Querschnitt ausgedrückt, gebildet wird, wobei der Winkel des geometrischen Raumes so gross ist, das die Strömungsgeschwindigkeit der Partikel laufend abnimmt und diese in eine laminare Strömung und ohne Luftzutritt in das Stoffsystem, aus dem geometrischen Raum in den zylindrischen Raum des Trennbehälters eintreten und sich mit einer grösseren Steiggeschwindigkeit der Leichtfraktion und einer geringeren Sinkgeschwindigkeit der Schwerfraktion aufgrund der unterschiedlichen spezifischen Dichten der Partikel in den oberen Steigraum und den unteren Sinkraum des zylindrischen Raumes, die durch den zentral angeordneten Kegelteile praktisch abgegrenzt sind, in Fraktionen trennen in einem flüssigen Trennmdium, dessen spezifische Dichte zwischen den spezifischen Dichten der zu trennenden Fraktionen eingestellt ist und konstant gehal - ten wird, und das einen Zusatz von oberflächen aktiven Stoffen, vorzugsweise von nichtionischen, aufweist, und die Eintrittsgeschwindigkeit der Mischung in den geometrischen Raum nicht so gross ist, dass Partikel gegen die zylindrische Seitenwand gedrückt werden und dadurch in eine turbulente Strömung übergehen können, und die getrennten Fraktionen in einen oberen und einen unteren, konischen Raum eintreten, die mit dem zylindrischen Raum des Trennbehälters verbunden sind, und in diesen Räumen eine Verdichtung der Partikel in dem Trennmedium ( spezifische Raumdichte, g/cm$^3$) erfolgt,

e) : und die getrennten Partikel am oberen und am unteren Ende des gefluteten Trennbehälters mit dem Trennmedium ausgeführt werden, dieses abfiltriert oder abzentrifugiert wird und in den Einspülbehälter im Kreislauf zurückgeführt wird, und die abgetrennte spezifisch leichtere und und die spezifisch schwerere Franktion der Kunststoff-Partikel durch Trocknung auf eine Restfeuchte von etwa 0,5 % gebracht und entweder in die folgende Trennstufe eingeführt wird zur weiteren Trennung in Fraktionen bis zur Sorteneinheit, oder als bereits sortenreine Fraktion ausgeführt wird.

Die Unteransprüche beanspruchen eine alternative und bevorzugte Lösung der Aufgaben der Erfindung nach Anspruch 1.

Diese beanspruchen auch eine bevorzugte Anlage zur Durchführung des Verfahrens der Erfindung.

Kunststoffe mit ihren Kurzzeichen sind folgender Verbrauchsgegenständen zuzuordnen;

| Kunststoff | spez.Dichte | Verwendung |
|---|---|---|
| PP | 0,90 | Becher,Verschlüsse |
| LDPE | 0.92 | Folien |
| HDPE | 0,95 | Flaschen,Kanister |
| PS | 1,05 | Becker, Kosmetik |
| PET | 1,33 | Flaschen |
| PVC | 1,38 | Becher,Blister, Flaschen. |

Neben dieser Hauptverwendung sind Spezialverwendungen bekannt, die ebenfalls nach dem Verfahren der Erfindung aufgrund ihrer unterschiedlichen Zusammensetzung und ihrer verschiedenen spezifischen Dichte ( spezifisches Gewicht, $g/cm^3$). durch Trennung aufbereitet und damit entsorgt werden können.

Ein technischer Effekt des Verfahrens der Erfindung liegt in der überraschend praktisch vollständigen Trennung von Kunststoffen aus Gemischen unterschiedlicher Zusammensetzung und verschiedener spezifischer Dichten. Dieser beruht darauf, dass sich durch die konstruktive Ausbildung der mit den Spitzen aufeinander stehender Doppelkegel ein geometrischer Raum ausbildet, in dem sich in laminarer Strömung die horizontale Strömungsgeschwindigkeit der Partikel laufend verringert und beim Eintreten in den geteilten zylindrischen Raum in eine ebenso laminare aufsteigende und absinkende Strömung dieser Partikel mit Differenz der Strömungsgeschwindigkeiten übergeht.

Das Verfahren der Erfindung beruht also auf der Kombination der Massnahmen zur Herbeiführung der laminaren Strömung mit Strömungsdifferenz der Partikel mit der dafür notwendigen konstruktiven Ausbildung der mit ihren Spitzen aufeinander stehender Doppelkegel und den durch diese ausgebildeten, geometrischen Raum, der seinerseits mit dem zylindrischen Raum im freien Übergang der Partikel kombiniert ist.

Das Verfahren der Erfindung bietet den volkswirtschaftlichen Vorteil der Recyclisierung von gebrauchten Kunststoffen aus Haushalten und aus industrieller Produktion. Dieses vermeidet also die Notwendigkeit einer aufwendigen Aufhaldung oder Deponie in über- oder untertägigen Deponien.

Die Wiederverwendung der sortenrein abgetrennten, gebrauchten Kunststoffe führt zu einer grossen Wirtschaftlichkeit des Verfahrens der Erfindung. Dieser Vorteil liegt auch in der Kreislaufführung des flüssigen Trennmediums.

Es werden beispielsweise getrennt:

Wasser- Trennstufe

Trenndichte 1,0 g /$cm^3$

Trennung: Polyolefine von anderen, im Verpackungsbereich eingesetzten Kunststoffe. Dichtedifferenz der Kunststoffe: $0,1/cm^3$

bei HD- Polyethylen = 0,95 g/$cm^3$

Polystyrol = 1,05 g/$cm^3$

Salz- Trennstufe Trenndichte über 1,3 g/$cm^3$

Trennung: PS und PVC/PET Dichtedifferenz der Kunststoffe: 0,3 g/$cm^3$

Trennung: PVC/ PET Dichtedifferenz der Kunststoffe: 0,05 g/$cm^3$ Alkohol- Trennstufe Trenndichte kleiner 1,0 g/$cm^3$

Trennung: Polypropylen von Polyethylen Dichtedifferenz der Kunststoffe: 0,032 g/$cm^3$ Es werden beispielsweise folgende Trennergebnisse erzielt:

| Trennmedium | Dichtedifferenz g/$cm^3$ | Ausbringen | |
|---|---|---|---|
| | | LG | SG |
| Wasser | 0,076 | 100,00 | 99,99 |
| Salzlösung | 0,054<br>0,062 | 100,00<br>100,00 | 99,99<br>99.99- |
| Alkohol | 0,032<br>0,032 | 99,54<br>94,7 | 99,80-<br>99,99- |

Die hohen Trenngrade zeigen zugleich die Sortenreinheit der getrennten Fraktionen.

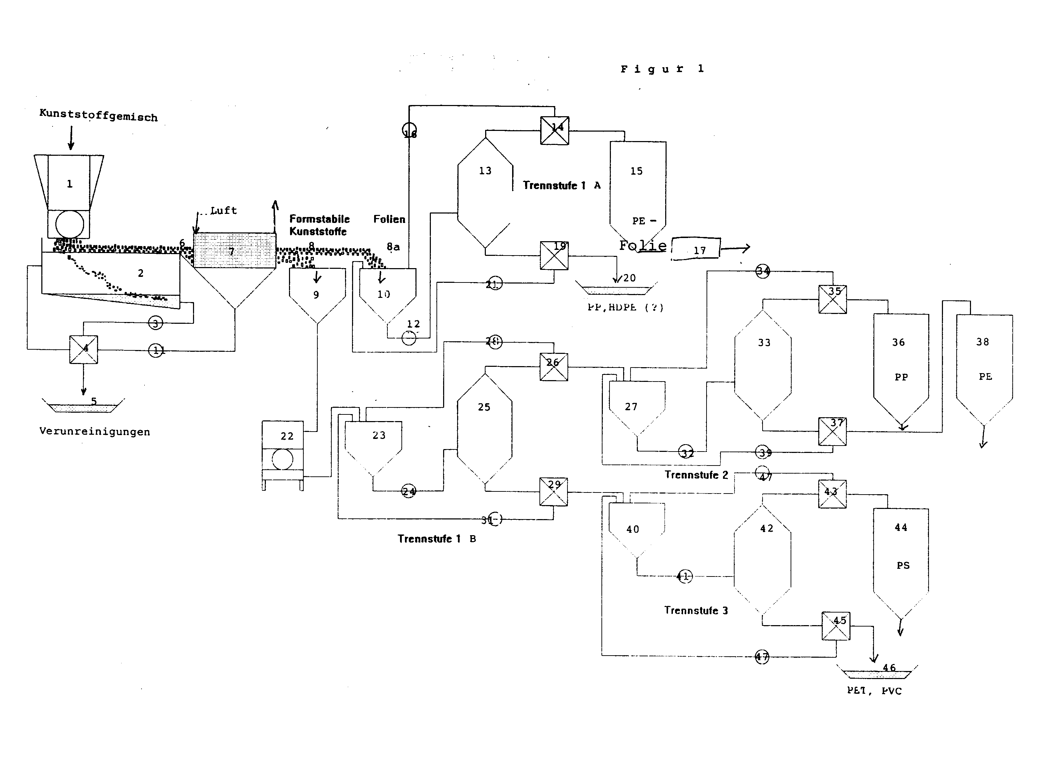

Figur 1 stellt das Fliesschema der Anlage gemäss der Erfindung dar. Es bedeuten:

| Ziffer | Teil-vorrichtung |
|--------|------------------|
| 1 | Zerkleinerungsmühle |
| 2 | Vortrennungsbecken |
| 3 | Pumpe |
| 4 | Filter |
| 5 | Auffangbehälter |
| 6 | Überlauf |
| 7 | Windsichter |
| 8 | Formstabile Kunststoffpartikel |
| 8a | Kunststoffolien |
| 9 | konischer Behälter |
| 10 | konischer Behälter |
| 11 | Pumpe |
| 12 | Pumpe |
| 13 | Trennbehälter |
| 14 | Filter |
| 15 | Silo |
| 16 | Pumpe |
| 17 | Trockner |
| 19 | Filter |
| 20 | Auffangbehälter |
| 21 | Pumpe |
| 22 | Nachzerkleinerungsmühle |
| 23 | konischer Behälter |
| 24 | Pumpe |
| 25 | Trennbehälter |

| Ziffer | Teilvorrichtung |
|--------|-----------------|
| 26 | Filter |
| 27 | konischer Behälter |
| 28 | Pumpe |
| 29 | Filter |
| 31 | Pumpe |
| 32 | Pumpe |
| 33 | Trennbehälter |
| 35 | Filter |
| 36 | Silo |
| 37 | Filter |
| 38 | Silo |
| 39 | Pumpe |
| 40 | konischer Behälter |
| 41 | Pumpe |
| 42 | Trennbehälter |
| 43 | Pumpe |
| 44 | Silo |
| 45 | Filter |
| 46 | Auffangbehälter |
| 47 | Pumpe |

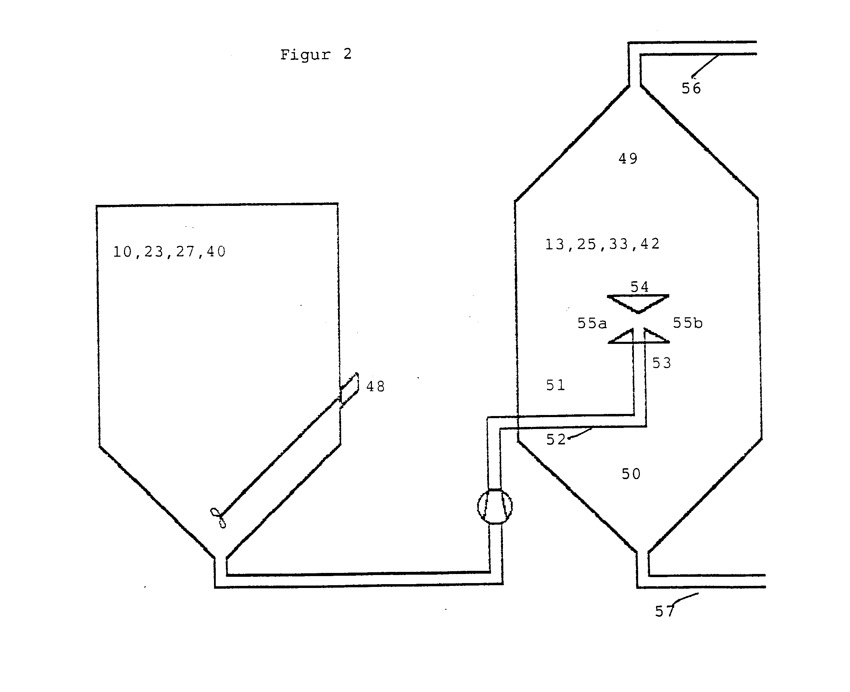

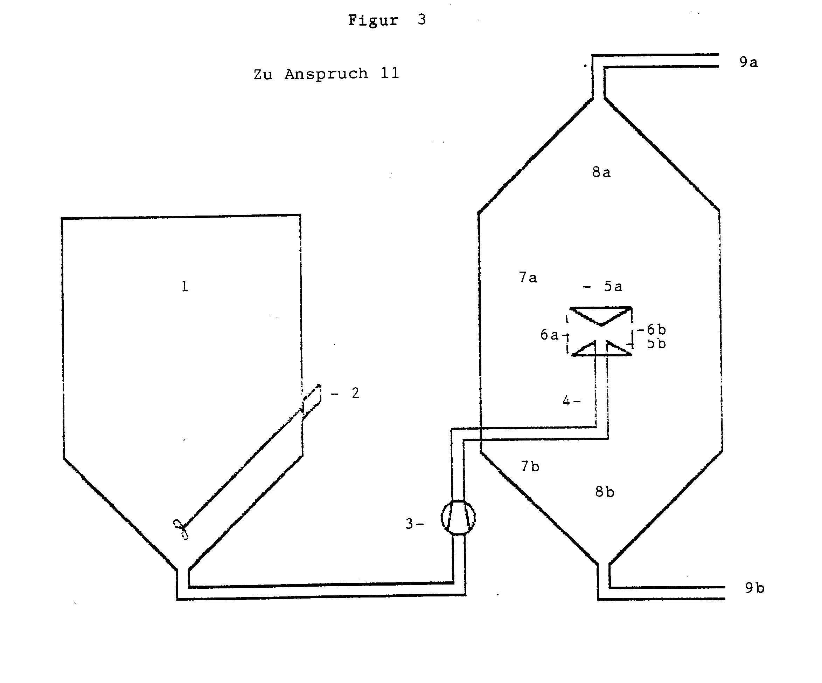

Figur 2 demonstriert den konischen Rührbehälter und die Trennvorrichtung.

| Ziffer | Teilvorrichtung |
|--------|-----------------|
| 48 | seitliches Rührwerk des konischen Behälters |

Trennbehälter:

49 oberer konischer Teil

50 unterer konischer Teil

51 zylindrischer Mittelteil

52 Steigleitung

53 nach oben gerichtete Spitze des unteren Kegelteiles

54 nach unten gerichtete Spitze des oberen Kegelteiles

55,a,b verbreiteter Raum

56 Leitung

57 Leitung

Figur 2 demonstriert die trennbehälter:

Stufe 1A = (13), Stufe 1B = (25), Stufe 2 = (33), Stufe 3 = (42) Diese Teilvorrichtung besteht aus einem vorgeschalteten,konischen Behälter ( 10,23,27,40) mit seitlichen Rührwerk (48) und aus dem Trennbehälter (13, 25, 33, 42) Dieser weist einen oberen (49) und einen unteren (50) konischen Teil und das zylindrische Mittelteil (51) auf.In das Mittelteil ist die Steigleitung (52) für die Zuführung der homogenen Suspension der Kunststoffpartikel mit dem Trennmedium eingeführt. Diese Leitung (52) endet in der nach oben gerichteten Spitze des unteren Kegelteiles (53), welcher die nach unten gerichtete Spitze des oberen Kegelteiles ( 54) gegenübersteht. Diese beiden Kegelteilie bilden einen Doppelkegel aus.Der seitliche Austritt der zu trennenden Suspension erfolgt in den sich verbreiterndem Raum (55,a,b) zwischen den gegeneinander gerichteten Kegelflächen unter Herabsetzung der Strömungsgeschwindigkeit der Kunststoffpartikel.

Die Trennung in eine aufschwimmende und eine absinkende Fraktion der Kunststoffsorten erfolgt in dem zylindrischen Raum (51), aus dem diese durch die Leitungen (56,57) abgeführt werden.

Die Anlage der Erfindung ermöglicht ohne eine kostenintensive Vorsortierung sortenreine Kunststoffe als Granulate bis zu einer Differenz der spezifischen Dichten von 0,03 $g/cm^3$ zu erzeugen.

Die Dichten der in der Praxis verwendeten Kunststoffe liegen zwischen 0,90 bis 1,38 $g/cm^3$. Dies zeigt die folgende Tabelle:

| Kunststoff | Verwendung | spez.Dichte |
|------------|-----------|-------------|
| PP | Becher, Flaschenverschlüsse | 0,90 |
| LDPE | Folien | 0,92 |
| HDPE | Flaschen, Kanister | 0,95 |
| PS | Becher,Kosmetik-Verpackung | 1,05 |
| PET | Flaschen | 1,33 |
| PVC | Becher,Blister,Flaschen | 1,38 |

Es wird beispielsweise ein Kunststoffgemisch wie folgt in der Anlage der Erfindung getrennt, wie in dem Fliesschema in Figur 1 dargestellt:

Kunststoffe im Gemisch: PE-Folie, PE, PP, HDPE, PS, ET, PVC.
Windsichter : Formstabile Kunststoffe-PE- Folien
Trennstufe 1A (13):
Leichtfraktion: PE- Folie,
Schwerfraktion: PP, HDPE (?)
Trennstufe 1B (25):
Leichtfraktion : PP, PE
Schwerfraktion : PET, PVC, PS
Trennstufe 2 ( 33) :
Leichtfraktion : PP
Schwerfraktion : PE
Trennstufe 3 ( 42) :
Leichtfraktion : PS
Schwerfraktion : PET,PVC

Die Kurzbezeichnungen der Kunststoffsorten sind chemisch wie folgt charakterisiert:

| Beispiele | | Dichte ($g/cm^3$) |
|---|---|---|
| PE | | |
| HDPE | Polyethylen | 0,945-0,948 |
| PP | Polypropylen | 0,900-0,904 |
| PET | | |
| PS | Polystyrol | 1,050-1.052 |
| PVC | Polyvinylchlorid | |
| LDPE | | |
| PETG | | |
| PA | Polyamid | 1,113-1,118 |
| PC | Polycarbonat | 1,193-1,196 |

Die Anlage der Erfindung ist nicht auf das Beispiel des Fliesschemas nach Figur 1 beschränkt. Es können in analoger Weise andere Gemische von Kunststoffsorten bis zu sortenreinen Kunststoffen getrennt werden unter Benutzung der gleichen Trennbehälter und des gleichen Trenneffektes der technologischen Trennung in laminarer Strömung unter Verwendung eines Trennmediums mit einer zwischen den spezifische) Dichten der zu trennenden Fraktionen liegenden spezifischen Dichte des eingestellten Trennmediums.

Es können in der Anlage der Erfindung die Einheiten gemäss Figur 2 aus konischen Behältern mit Rührwerk mit Trennbehältern mit den erforderlichen Filtern und Pumpen zu weiteren Trennstufen kombiniert werden.

Die Anlage der Erfindung gestattet das volkswirtschaftlich bedeutende Problem der technologischen Trennung der Kunststoffsorten zu verträglichen Gemischen oder zu sortenreinen Kunststoffen zu lösen und damit ein Recycling zu ermöglichen.

**Patentansprüche**

1. Verfahren zur Trennung zerkleinerter Kunststoffe verschiedener chemischer Zusammensetzung und unterschiedlicher spezifischer Dichte,gekennzeichnet durch folgende Verfahrensstufen:

   a): Trocken- oder Nasszerkleinerung der angelieferten Kunststoffe, vorzugsweise auf eine Partikelgrösse von etwa 20 - 60 mm,

   Einführen der zerkleinerten Partikel in ein Schwimm- Sinkbecken, in dem die Partikel der Kunststoffe von schwereren Fremstoffen, wie metallische Gegenstände, Sand u.dergl., abgetrennt werden, in der Weise, dass am oberen Teil des länglichen Behälters eine horizontale Strömung in Richtung auf den überlauf auf der gegenüber liegenden Seite erzeugt wird,

   und danach die Partikel der Kunststoffe am Überlauf austreten und die Fremdkörper am unteren

EP 0 557 816 A2

Ende abgezogen werden, und das flüssige Trennmedium gefiltert und im Kreislauf zurücKgeführt wird.

b): danach die,gegebenenfalls zwischengetrockneten Partikel aus Kunststoff in einen als Siebrohr ausgelegten Windsichter eingeführt werden, in diesem Restflüssigkeit abtropfen kann, und in dem Windsichter durch eingeblasene Luft Folien- Kunststoff-Partikel (FKSTP) von formstabilen Kunststoff-Partikeln (FSTKSTP) in der Weise getrennt werden, dass die FSTKSTP aufgrund ihres geringeren Luftwiderstandes bereits am Ende des Windsichters ausgetragen und die FKSTP aufgrund ihres grösseren Luftwiderstandes weiter getragen und in getrennten Behältern aufgefangen werden, und die Luft am Ende austritt,

c): danach die FKSTP in einen Einspülbehälter eingeführt und durch Rühren, insbesondere durch seitliches Rühren, mit einem im Kreislauf geführten Trennmedium in eine hinreichend homogene Mischung übergeführt werden,

oder die FSTKSP auf eine Korngrösse von annähernd 3 - 6 mm nachzerkleinert und danach in gleicher Weise in einen Einspülbehälter eingeführt und mit einem im Kreislauf geführten Trennmedium in eine hinreichend homogene Mischung überführt werden,

und das flüssige Trennmedium für FKSTP sowie für FSTKSP jeweils zwischen den zu trennende Fraktionen der Kunststoffpartikel eingestellt wird,

d): Abpumpen des annäherend homogenen Stoffgemisches in einen oder mehreren Trennbehälter nacheinander oder nebeneinander vorzugsweise von unten nach oben durch ein in der Mitte des Trennbehälters angeordnetes, senkrechtes Steigrohr und Austreten des Gemisches in eine umgelenkte, annähernd horizontale Richtung in einen, sich im Winkel nach aussen erweiternden Raumes, der, im Querschnitt ausgedrückt, aus dem Winkel des oberen und des unteren, aufeinanderstehenden Kegelteiles und einer gedachten Linie zwischen den Eckpunkten der Grenzlinien der Kegelteile gebildet ist, und dieser geometrische Raum auch durch die Länge der oberen und der unteren Kegelfläche, im Querschnitt ausgedrückt, gebildet wird, wobei der Winkel des geometrischen Raumes so gross ist, das die Strömungsgeschwindigkeit der Partikel laufend abnimmt und diese in eine laminare Strömung und ohne Luftzutritt in das Stoffsystem, aus dem geometrischen Raum in den zylindrischen Raum des Trennbehälters eintreten und sich mit einer Steiggeschwindigkeit der Leichtfraktion und einer Sinkgeschwindigkeit der Schwerfraktion aufgrund der unterschiedlichen spezifischen Dichten der Partikel in den oberen Steigraum und den unteren Sinkraum des zylindrischen Raumes, die durch den zentral angeordneten Kegelteile praktisch abgegrenzt sind, in Fraktionen trennen in einem flüssigen Trennmdium, dessen spezifische Dichte zwischen den spezifischen Dichten der zu trennenden Fraktionen eingestellt ist und konstant gehal - ten wird, und das einen Zusatz von oberflächen aktiven Stoffen, vorzugsweise von nichtionischen, aufweist, und die Eintrittsgeschwindigkeit der Mischung in den geometrischen Raum nicht so gross ist, dass Partikel gegen die zylindrische Seitenwand gedrückt werden und dadurch in eine turbulente Strömung übergehen können,

und die getrennten Fraktionen in einen oberen und einen unteren, konischen Raum eintreten, die mit dem zylindrischen Raum des Trennbehälters verbunden sind, und in diesen Räumen eine Verdichtung der Partikel in dem Trennmedium ( spezifische Raumdichte, $g/cm^3$) erfolgt,

e) : und die getrennten Partikel am oberen und am unteren Ende des gefluteten Trennbehälters mit dem Trennmedium ausgeführt werden, dieses abfiltriert oder abzentrifugiert wird und in den Einspülbehälter im Kreislauf zurückgeführt wird, und die abgetrennte spezifisch leichtere und und die spezifisch schwerere Franktion der Kunststoff-Partikel durch Trocknung auf eine Restfeuchte von etwa 0,5 % gebracht und entweder in die folgende Trennstufe eingeführt wird zur weiteren Trennung in Fraktionen bis zur Sorteneinheit, oder als bereits sortenreine Fraktion ausgeführt wird.

2. Verfahren nach Anspruch 1, dadurch gekennzeichnet, dass die Strömungsgeschwindigkeit im zylindrischen Teil des Trennbehälters auf 0,02-0,08 mm/sec eingestellt wird und sich eine Geschwindigkeit der Leichtfraktion,z.B. von Polyolefinen, von etwa 50 mm/sec und der Schwerfraktion, z.B. von Polystyrol, von 30 mm/sec bei der Trennung einstellt.

3. Verfahren nach Anspruch 1 dadurch gekennzeichnet, dass die Trennung von Kunststoff- Partikeln aus Polyäthylen und Polystyrol in Wasser mit Zusatz von oberflächenaktiven Stoffen erfolgt.

4. Verfahren nach Anspruch 1, dadurch gekennzeichnet: dass die Trennung von Gemischen von Kunststoff- Partikeln in der Weise erfolgt, dass zuerst die Abtrennung von Polyäthylen von den übrigen Kunststoffen erfolgt und danach in einer weiteren Stufe Polypropylen von den übrigen Kunststoffen und danach in einer weiteren Stufe Polystyrol von Polyester erfolgt.

**5.** Verfahren nach den Ansprüchen 1 bis 4, dadurch gekennzeichnet, dass bei Anwesenheit weiterer Kunststoff in dem Gemisch mit anderer Zusammensetzung, wie Polyamid, ABS, diese mit einem solchen Trennmedium abgetrennt werden, dessen spezifische Dichte jeweils zwischen dem abzutrennenden Kunststoff und dem Kunststoff-Partikeln anderer Zusammensetzung liegt.

**6.** Verfahren nach den Ansprüchen 1 - 5, dadurch gekennzeichnet, dass die Abtrennung der jeweiligen Leichtfraktion von den schwereren Fraktionen des Gemisches der Partikel mit Wasser mit dem spezifischen Gewicht von 1,0 oder mit einer Lösung von neutralen Salzen, wie von KC1 oder NaC1, mit einer spezifischen Dichte von 1,1 bis 1,4 oder mit einem homogenen Gemisch aus Isopropylalkohol und Wasser mit einer spezifischen Dichte zwischen 0,8 - 0,98 (g/ cm$^3$ ) erfolgt und das Trennmedium eine Zudosierung oberflächenaktiver Stoffe enthält.

**7.** Verfahren nach den Ansprüchen 1 bia 5, dadurch gekennzeichnet, dass Polyolefine mit Wasser, Polystyrol mit Salzlösung der spezifischen Dichter von 1,1, Polypropylen von Polyäthylen mit einem Gemisch von Isopropanol und Wasser mit einer spezifischen Dichte von 0,925, jeweils unter Zusatz von oberflächenaktiven Stoffen, erfolgt.

**8.** Verfahren nach den Ansprüchen 1 - 7, dadurch gekennzeichnet dass, der Feststoffgehalt der homogenen Mischung bis auf 50 Gew.-%, vorzugsweise auf 30 Gew.-%, eingestellt wird.

**9.** Verfahren nach den Ansprüchen 1 - 8, dadurch gekennzeichnet, dass als oberflächenaktive Stoffe vorzugsweise nichtionische, oder anionische oder kationische, eingesetzt werden und die Zudosierung in dem flüssigen Trennmedium erfolgt.

**10.** Verfahren nach den Ansprüchen 1 - 9, dadurch gekennzeichnet, dass die Trennung der Kunststoff-Partikel in den folgenden Stufen erfolgt:
In der 1. Trennstufe wird sortenreines Low- Density- Polyäthylen ( LDPE) abgetrennt und nach der Trocknung für die weitere Verwendung regranuliert, die abgetrennte,schwerere Fraktion aus Polyvinylchlorid (PVC),Polyäthylenterphthalat und Verbundfolien wird nach der Trocknung der Verarbeitung für gemischte Kunststoffe zugeführt, und danach in einer 2. Trennstufe werden die formstabilen Kunststoffe erneut zerkleinert und der 1. Trennstufe zugegeben,
es enthalten die beiden Austritte dieser Trennstufen die Leichtfraktionen, die aus PP und HDPE besteht, sowie die Schwerfraktion, die aus PS, PET, PVC besteht, wobei die Dichtedifferenz der in dieser Stufe getrennten Kunststoffe 0,09 beträgt,
und danach die Schwerfraktion einer weiteren Trennstufe zugeführt, aus der als Leichtfraktion sortenreines PS und als Schwerfraktion PET und PVC getrennt wird, wobei die Dichtedifferenz 0,28 beträgt,
und danach die aus der 1. Trennstufe abgetrennte Leichtfraktion aus PP und HDPE in einer weiteren Trennstufe in die sortenreinen Kunststoffe getrennt werden, wobei die Dichtedifferenz zwischen 0,03 - 0,05 differiert.

**11.** Teilvorrichtung zur Durchführung des Verfahrens der Erfindung gekennzeichnet durch folgende Teile:

| Ziffer | Teile |
|--------|-------|
| 1 | Einspülbehälter |
| 2 | Rührer |
| 3 | Pumpen |
| 4 | Steigrohr |
| 5 a,b | Doppelkegel |
| 6 a,b | gedachte Grenzlinie |
| 7 a,b | zylindrischer Raum |
| 8 a,b | konischer Raum |
| 9 a,b | 9 a,b Austritt |

**12.** Anlage zur Trennung zerkleinerter Kunststoffe verschiedener chemischer Zusammensetzung und unterschiedlicher spezifischer Dichte gekennzeichnet durch folgende Stufen:

1). Vorzerkleinerung des Kunststoffgemisches in einer Zerkleinerungsmühle (1) auf eine Partikelgrösse von etwa 20 - 60 mm und Aufgeben in ein längliches Vortrennungsbecken (2) mit in Fliessrichtung geneigter Bodenfläche mit horizontaler Strömung zur Abscheidung schwererer Verunreinigungen und Fremdstoffe am Boden, Abziehen mit mit Pumpe (3) über Filter (4) zur Abtrennung dieser Fraktion in einer Auffangwanne (5) und Rückführung Đer flüssigen Phase in das Vortrennungsbecken (2) und Überströmen der Kunststoffpartikel am oberen Überlauf (6) und Einführen in einen Windsichter (7) zur Trennung der Fraktionen durch eingeblasene Luft in eine Fraktion mit geringerem Luftwiderstand aus formstabilen Kunststoffpartikeln (FSTKSP) (8) in einen darunter befindlichen, konischen Behälter (9) und in eine Fraktion mit grösserem Luftwiderstand aus Folien in einen daneben befindlichen, konischen Behälter (10) und Austreten der Blasluft aus dem als Siebrohr ausgebildeten Windsichter (7), und Abziehen von flüssiger Phase am konischen Ende des Windsichters (7) durch Pumpe (11) und Rückführung über Filter (4) in das Vortrennungsbecken (2),

2) danach in Trennstufe 1 A Abziehen der Kunststoffolien aus Behälter (10) durch Pumpe (12) in einen Trennbehälter (13) zur Trennung der aufschwimmenden Kunststoffolie im Strömungs- Differenz- Verfahren, und Einführen über Filter (14) in das Silo (15) als sortenreine PE- Folie und Ausführen über einen Trockner (16) als Regranulat, Rückführung des Trennmediums aus Filter (14) durch Pumpe (16) in Behälter (10), Abtrennung der absinkende Restfraktion und Ausführung über ein Filter (19) in eine Wanne (20), Rückführung des Trennmediums aus Filter (19) mit Pumpe (21) in den Behälter (10),

3) danach in Trennstufe 1 B Abziehen der formstabilen Kunststoffe aus dem konischen Behälter (9) in eine Nachzerkleinerung (22) auf eine Korngrösse von annähernd 3 - 6 mm und Einführen in einen Einspülbehälter (23) und Vermischen mit einem, im Kreislauf geführten Trennmedium unter Rühren zu einer hinreichend homogenen Mischung und Einpumpen mit einer Pumpe (24) in einen Trennbehälter (25) zur Trennung im Strömungs- Differenz- Verfahren mit einer spezifischen Dichte des Trennmediums zwischen denen der Fraktionen, Aufschwimmen der Leichtfraktion aus PP und HDPE und Absinken der Schwerfraktion aus PS, PET und PCC, Ausführen der Leichtfraktion über Filter (26) in einen Behälter (27) und Rückführung des Trennmediums durch Pumpe (28) in Einspülbehälter (23) und Ausführung der Schwerfraktion über Filter (29) in Behälter (40) und Rückführung des Trennmediums durch Pumpe (31) in Behälter (23),

4) danach in Trennstufe 2 die Leichtfraktion aus dem Behälter (27) über Pumpe (32) in einen Trennbehälter (33) zur Trennung im Strömungs- Differenz- Verfahren mit einer spezifischen Dichte des Trennmediums zwischen den spezifischen Dichten der zu trennenden Fraktionen eingeführt wird, Aufschwimmen der Leichtfaktion, Abpumpen auf ein Filter (35), Einführen der sortenreinen Fraktion PP in Silo (36), Absinken der Schwerfraktion, Abführen auf Filter (37), Einführen in Silo (38) als sortenreine Fraktion PE, Rückführung des abgetrennten Trennmediums von Filter (37) mit Pumpe (39) in Behälter (27),

5) danach in Trennstufe (3) die Schwerfraktion aus dem Trennbehälter (25) in einem Behälter (40) mit Pumpe (41) in einen Trennbehälter (42) eingeführt wird zur Trennung im Strömungs- Differenz- Verfahren mit einer spezifischen Dichtes des Trennmediums zwischen den spezifischen Dichten der zu trennenden Fraktionen, Aufschwimmen der Leichtfraktion aus sortenreinem PS, Abpumpen mit Pumpe (43) in Silo (44), Absinken der Schwerfraktion, Abpumpen auf Filter (45), Ausführen in Wanne (46) für die Restfraktion aus PET, PVC, Rückführung des Trennmediums vom Filter (45) mit Pumpe (47) in Behälter (40),,

6) gegebenenfalls Trennstufe 4 zur Trennung der Leichtfraktion aus PP und HDPE aus Trennstufe 1B aus Trennbehälter (25), in sortenreines PP und HDPE in gleicher Weise mit einem Trennmedium zwischen der Dichtedifferenz der Kunststoffe von 0,02,

7) gegebenenfalls Trennstufe 5 zur Trennung der Schwerfraktion aus PET, PVC aus Trennbehälter (42) mit einem Trennmedium zwischen der Dichtedifferenz der Kunststoffe von 0,05.

**13.** Anlage nach Anspruch 12 bestehend aus einer Teilvorrichtung aus mehreren, vorgeschalteten, konischen Behältern (10,23,27,40) mit seitlich, schräg eingeführtem Rührwerk, und mit mehreren Trennbehältern (13, 25, 33, 42) zur Trennung im Strömungs- Differenz- Verfahren, von Kunststoffpartikeln mit einem Trennmedium mit einer spezifischen Dichte zwischen den spezifischen Dichten der zu trennenden Fraktionen, die einen oberen (49) und einen unteren (50) konischen Teil und einen zylindrischen Mittelteil (51) aufweisen, und in das Mittelteil (51) eine Stegleitung (52) für die Zuführung der homogenen Suspension der Kunststoffpartikel im Trennmedium seitlich eingeführt ist, und diese Leitung (52) in der nach oben gerichteten Spitze des unteren Kegelteiles (53) endet, welcher die nach unten gerichtete Spitze des oberen Kegelteiles (54) gegenübersteht, und dessen beide Kegelteile einen Doppelkegel bilden, wobei die zu trennende Suspension sich in dem verbreiternden, geometrischen Raum (55,a,b) in eine aufschwimmende und in eine absinkende Fraktion aufteilt unter Herabsetzung der Strömungsgeschwindigkeit der Kunststoffpartikel, und die beiden getrennten Fraktionen durch die Leitungen (56, 57) ausgeführt werden.

14. Anlage nach Anspruch 12, gekennzeichnet durch die Kombination mit weiteren Einheiten aus konischen Behältern (10, 23, 27, 40) mit Rührwerk mit Trennbehältern ( 13, 25, 33, 42) mit den dazu erforderlichen Filtern und Pumpen.

15. Anlage nach den Ansprüchen 12-14 dadurch gekennzeichnet,, dass nach der Abtrennung des Trennmediums auf einem Filter oder mit einer Zentrifuge bis auf einen Restgehalt von etwa 1-3% von den Kunststofffraktionen, diese auf dem Filter, oder der Zentrifuge oder in einer Rührvorrichtung mit einer Wasserdecke von der Restmenge des Trennmediums befreit werden und danach in einer Trocknungsvorrichtung eine Trocknung der Kunststoffpartikel erfolgt.

16. Anlage nach den Ansprüchen 12-15, dadurch gekennzeichnet, dass die Einstellung und kontinuierliche Überwachung zur Nacheinstellung des im Kreislauf geführten Trennmediums durch Ermittlung der Dichte ( $d = g / cm^3$ ) durch forlaufende elektronische Messung der Schwingungsdauer einer Messzelle in Form eines U- Rohres mit Biegeschwingung erfolgt,insbesondere mit einer Genauigkeit von 0,0001 g/cm³ in Schwingungsröhren aus Edelstahl oder Borosilikat.

Figur 1

Kunststoffgemisch

Verunreinigungen

Luft

Formstabile Kunststoffe

Folien

Trennstufe 1 A

PE - Folie

PP, HDPE (?)

Trennstufe 1 B

Trennstufe 2

Trennstufe 3

PE

PP

PS

PET, PVC

Figur 2

Figur 3

Zu Anspruch 11

9a

8a

7a   - 5a

6a ⌐      ⌐ 6b
      ⌐ 5b

4 -

7b

8b

3 -

9b

EP 0 557 816 A2

15